Europäisches Patentamt

European Patent Office

Office européen des brevets

(19)

(11) **EP 0 682 060 B1**

(12) **FASCICULE DE BREVET EUROPEEN**

(45) Date de publication et mention
de la délivrance du brevet:
**28.08.2002 Bulletin 2002/35**

(51) Int Cl.⁷: **C08J 5/12**, B29C 35/02
// C08L21:00, C08L87:00

(21) Numéro de dépôt: **95400896.7**

(22) Date de dépôt: **21.04.1995**

(54) **Matériaux comprenant un élastomère vulcanisé associé à un élastomère thermoplastique**

Verbundmaterial aus vulkanisiertem Gummi und einem thermoplastischem Elastomer

Composite material comprising a vulcanised elastomer and a thermoplastic elastomer

(84) Etats contractants désignés:
**BE CH DE DK ES FR GB IT LI NL SE**

(30) Priorité: **06.05.1994 FR 9405612**

(43) Date de publication de la demande:
**15.11.1995 Bulletin 1995/46**

(73) Titulaire: **Atofina**
**92800 Puteaux (FR)**

(72) Inventeurs:
• **Alex, Patrick**
**F-91470 Limours Pequese (FR)**
• **Dousson, Christian**
**F-27300 Bernay (FR)**
• **Tron, Loic**
**F-92300 Levallois-Perret (FR)**
• **Cerf, Martine**
**F-27300 Bernay (FR)**

(56) Documents cités:
**EP-A- 0 550 346**      **EP-A- 0 607 085**

**Description**

On a décrit dans la demande de brevet EP 0 550 346 des matériaux formés d'un élastomère vulcanisé associé sans adhésif à un élastomère thermoplastique ayant des séquences polyamides. Ces matériaux peuvent se présenter sous la forme d'une feuille d'élastomère vulcanisé adhérant sur feuille de l'élastomère thermoplastique. "Associé sans adhésif" veut dire que les deux élastomères adhèrent en eux-mêmes l'un sur l'autre et que si on essaie de les séparer, il y a rupture de l'un des deux élastomères.

C'est la rupture cohésive par opposition à la rupture adhésive quand la séparation se fait à l'interface des deux élastomères.

On peut fabriquer le matériau de l'art antérieur en effectuant la vulcanisation de l'élastomère dans un moule dont une partie est occupée par l'élastomère thermoplastique à séquences polyamides.

Jusqu'à présent, il était nécessaire d'effectuer la vulcanisation dans une plage de température ayant une amplitude de 5° C au plus.

Si on ne respecte pas cette plage au risque d'obtenir une mauvaise adhérence (rupture adhésive) ou des difficultés pour démouler le matériau.

Cette technique de l'art antérieur est utile pour produire des semelles de chaussures mais il est difficile, dans un atelier industriel comprenant de nombreux moules qui s'ouvrent et se ferment souvent, d'éviter des variations de température d'amplitude supérieure à 5° C.

La demanderesse a maintenant trouvé qu'en utilisant un élastomère thermoplastique comprenant des séquences à base de polyamide 6 et des séquences polyéther, on pouvait effectuer la vulcanisation dans une plage de température dont l'amplitude peut atteindre plusieurs dizaines de degrés et souvent plus de 40° C.

Le matériau obtenu présente une rupture cohésive quelle que soit la température de vulcanisation choisie dans cette large plage.

La présente invention est donc un matériau comprenant un élastomère vulcanisé adhérent, essentiellement sans adhésif, sur un élastomère thermoplastique comprenant des motifs à base de polyamide 6 et des séquences polyéthers.

L'invention concerne aussi le procédé de préparation d'un tel matériau.

Les élastomères synthétiques ou naturels vulcanisables convenant pour la mise en oeuvre de la présente invention sont bien connus de l'homme de métier, le terme élastomère dans la définition de la présente invention signifiant que celui-ci peut être constitué de mélanges de plusieurs élastomères.

Ces élastomères ou mélanges d'élastomères présentent une déformation rémanente à la compression (D. R.C.) à 100° C inférieure à 50 % généralement entre 5 et 40 % et de préférence inférieure à 30 %.

Parmi ceux-ci, on peut citer le caoutchouc naturel, le polyisoprène ayant un taux élevé de double liaison en position cis, une émulsion polymérisée à base de copolymère styrène/butadiène, un polybutadiène ayant un taux élevé de double liaison en position cis obtenu par catalyse au nickel, cobalt, titane ou néodynium, un terpolymère éthylène halogéné/propylène/diène, un caoutchouc butyle halogéné, un copolymère séquencé styrène/butadiène, un copolymère séquencé styrène/isopropène, les produits halogénés des polymères ci-dessus, un copolymère acrylonitrile/butadiène, un élastomère acrylique, un élastomère fluoré et le chloroprène. On utilise aussi les caoutchoucs épichlorhydrine.

Dans le cas où les élastomères mentionnés ci-dessus ne comportent pas de radicaux acide carboxylique ou anhydride desdits acides (ce qui est le cas de la plupart de ceux-ci), lesdits radicaux seront apportés par greffage, de façon connue, des élastomères mentionnés ci-dessus où par des mélanges d'élastomères, par exemple avec des élastomères acryliques.

Parmi les élastomères mentionnés ci-dessus, on choisira avantageusement ceux compris dans le groupe suivant : les élastomères nitriles carboxylés, les élastomères acryliques, les polybutadiènes carboxylés, les terpolymères éthylène/propylène/diène greffés ou les mélanges de ces polymères avec les mêmes élastomères mais non greffés comme les caoutchoucs nitriles, les polybutadiènes, les terpolymères éthylène/propylène/diène, seuls ou en mélange

De préférence, les élastomères vulcanisables précités comportent un taux en poids de radicaux acide carboxylique ou anhydride de diacide carboxylique compris entre 0,3 et 10 % par rapport auxdits élastomères.

Les systèmes de vulcanisation convenant pour la présente invention sont bien connus de l'homme de métier et en conséquence, l'invention n'est pas limitée à un type particulier de systèmes.

Lorsque l'élastomère est à base de monomère insaturé (butadiène, isoprène, vinylidène-norbornène .) on peut citer quatre types de systèmes de vulcanisation .

- Systèmes au soufre constitués de soufre associé aux accélérateurs usuels tels que les sels métalliques de dithiocarbamates (diméthyl dithiocarbamate de zinc, de tellure, etc.), les sulféramides, etc
  Ces systèmes peuvent contenir également de l'oxyde de zinc associé à de l'acide stéarique.

- Systèmes donneurs de soufre dans lesquels la majorité du soufre utilisé pour les pontages, provient de molécules soufrées telles que les composés organosoufrés cités plus haut.
- Systèmes aux résines phénoliques constitués de résines formophénoliques difonctionnelles pouvant être halogénées associées à des accélérateurs tels que le chlorure stanneux, l'oxyde de zinc.
- Systèmes aux peroxydes. Tous les donneurs de radicaux libres peuvent être utilisés (peroxydes de dicumyle, etc.) en association avec l'oxyde de zinc et l'acide stéarique.

Lorsque l'élastomère est acrylique (polyacrylate de butyle avec fonctions acides ou époxy ou toute autre fonction réactive permettant la réticulation), on utilise les réticulants habituels à base de diamines (orthotoluidyl guanidine, diphénylguanidine, etc.) ou de diamines bloquées (carbamate d'hexaméthylène diamine etc.).

Les compositions élastomériques peuvent être modifiées pour certaines propriétés particulières (amélioration des propriétés mécaniques par exemple) par l'addition de charges telles que le noir de carbone, la silice, le kaolin, l'aluminium, l'argile, le talc, la craie, etc. Ces charges peuvent être traitées en surface par des silanes, des polyéthylèneglycols ou toute autre molécule de couplage. En général, le taux de charges en parties en poids est compris entre 5 et 100 pour 100 parties d'élastomères.

En outre, les compositions peuvent être assouplies par des plastifiants tels que les huiles minérales dérivées du pétrole, les esters de l'acide phtalique ou de l'acide sébacique, les plastifiants polymères liquides tels que le polybutadiène de faible masse éventuellement carboxylé, et d'autres plastifiants bien connus de l'homme de métier.

Les combinaisons d'agent de vulcanisation utilisées pour mettre en oeuvre le procédé sont telles qu'elles doivent permettre une réticulation complète de l'élastomère selon une cinétique conduisant à de bonnes propriétés de résistances à la séparation, telles que mentionnées plus haut dans la définition de l'invention et en général, à de bonnes propriétés caoutchoutiques (mesurées par une déformation rémanente à la compression à 100° C, des propriétés dynamométriques en traction, etc.).

Quant aux élastomères thermoplastiques qui comprennent des séquences polyéthers et des motifs à base de polyamide 6, ils peuvent être répartis de façon statistique ou ordonnée. Les motifs polyamides peuvent être isolés ou groupés dans des oligomères provenant de la condensation du caprolactame.

"A base de polyamide 6" veut dire que ce sont des homopolymères du caprolactame ou des copolymères avec des diamines et diacides en C6 ou du lauryllactame ou tout autre motif. L'essentiel des motifs polyamides étant constitué de restes de caprolactame.

Les élastomères les plus utilisés sont ceux comprenant des blocs polyamides et des blocs polyéthers. Les blocs polyamides peuvent provenir de la condensation du caprolactame.

Ces blocs polyamides peuvent être préparés en présence d'un diacide. On obtient des blocs polyamides à extrémités acide carboxylique. La masse molaire $\overline{\mathrm{Mn}}$ des blocs polyamides peut être entre 600 et 5000.

Les polyéthers sont par exemple du polyéthylène glycol, du polypropylène glycol ou du polytéraméthylène glycol de masse molaire $\overline{\mathrm{Mn}}$ entre 250 et 6000, plusieurs polyéthers peuvent être enchaînés par exemple par des diacides dans le cas des polyétherdiols.

On ne sortirait pas du cadre de l'invention en utilisant d'autres élastomères à blocs polyamides et à blocs polyéthers. Ces produits peuvent être préparés par réaction de lactame de diacide et de polyétherdiol ou polyétherdiamine. On peut aussi condenser des blocs polyamides à extrémités aminées avec des polyéthers diacides, condenser des blocs polyamides à extrémités acides avec des polyétherdiamines.

Tous ces produits sont décrits dans les brevets US 4,331,786 - 4,115,475 - 4,195,015 - 4,839,441 et 4,864,014.

On utilise avantageusement les élastomères comprenant des blocs polyamides 6 de masse molaire moyenne en nombre allant de 1000 à 3000.

Parmi ces élastomères, on préfère ceux ayant des blocs polyéther provenant du polytetraméthylèneglycol (PTMG). La masse molaire moyenne en nombre de ces PTMG est comprise entre 300 et 2000.

Dans l'art antérieur EP 550 346, il est nécessaire d'effectuer la vulcanisation près du point VICAT de l'élastomère thermoplastique par exemple dans la plage de température allant du point VICAT à 5° C en-dessous du point VICAT.

Le point VICAT ou encore point de ramollissement est un paramètre bien connu pour mesurer les propriétés physiques d'un polymère. Le point VICAT est la température à laquelle une aiguille ayant une section transversale circulaire de 1 mm$^2$ pénètre de 1 mm de profondeur dans l'échantillon lors d'une montée de température de 50° C par heure selon la norme ASTM D1525 Ainsi, à cette température, le polymère ne flue pas et n'est pas à l'état fondu.

Si on ne respecte pas cette plage de température, on obtient un matériau ayant au mieux une rupture adhésive.

La demanderesse a découvert qu'en utilisant des élastomères thermoplastiques comprenant des motifs à base de polyamide 6 et des séquences polyéther, on pouvait effectuer la vulcanisation dans une plus large plage que celle de l'art antérieur.

Ces élastomères thermoplastiques ont un point de fusion compris entre.170 et 220° C, un point VICAT entre.

130 et 180° C.

Avantageusement, la cinétique mesurée à l'aide d'un rhéomètre oscillant sera telle que le temps caractéristique de vulcanisation à 90 %, $t_{90}$, ne dépasse pas 15 minutes et avantageusement sera compris entre 5 et 10 minutes.

Par ailleurs, il a été trouvé que le temps de démarrage de vulcanisation (ou temps de prise) correspondant à une augmentation de couple de 0,2 N.m était un facteur important pour obtenir des matériaux présentant de bonne performances. Ainsi, il est avantageux que l'augmentation de couple précité soit atteinte dans un temps supérieur ou égal à 4 minutes à la température de moulage et de préférence entre 4 et 6 minutes.

De façon générale, le procédé consiste à former l'élastomère thermoplastique à motifs polyamide et séquences polyéther puis à disposer par un moyen approprié l'élastomère thermoplastique à motifs polyamide dans un moule de vulcanisation, de manière, de préférence, à ce qu'il soit apposé contre une des parois du moule. Ainsi, dans le cas où l'élastomère est un film, celui-ci est formé par extrusion notamment. Son épaisseur variera de préférence entre 0,3 et 5 mm, avantageusement inférieure ou égale à 1 mm. La largeur du film est variable; et il peut être découpé à l'emporte-pièce. La pièce de film est ensuite positionnée contre au moins une partie de la paroi du moule de vulcanisation de l'élastomère, de manière connue. Les pièces de film peuvent également être stockées le temps souhaité.

Dans le cas où l'élastomère thermoplastique est formé d'un élément de forme définie par exemple en forme de profilé découpé, celui-ci est de préférence apposé au fond du moule.

On peut également utiliser un moule à injection bi-matière séquencée Dans ce cas, le moule est équipé de cache-empreintes de la partie élastomère qui sont retirés après injection du thermoplastique pour permettre l'injection de l'élastomère à vulcaniser.

La composition élastomérique comportant l'élastomère avec ses charges, plastifiants et autres adjuvants, mais sans le système de réticulation est formulée dans un réacteur approprié, puis elle est reprise éventuellement dans un autre mélangeur, à une température appropriée avec le système de vulcanisation.

Le moulage de l'élastomère ainsi que sa vulcanisation est effectuée dans le moule dont une partie est occupée par la pièce d'élastomère à motifs polyamide comme indiqué ci-dessus, selon un des procédés classiques de l'industrie du caoutchouc : compression simple, compression transfert, injection, injection de transfert. En général, elle s'effectue dans un moule à compression en acier, d'une épaisseur de quelques millimètres, placé entre deux plateaux chauffants d'une presse. La quantité de composition élastomérique introduite dans le moule peut dépasser légèrement le volume de l'empreinte. La fermeture de la presse entraîne le fluage de l'élastomère dans le moule et l'évacuation de l'excès d'élastomère par les canaux de débordement. Ainsi, après répartition de matière, et compte tenu de la géométrie du moule, la pression sur la composition élastomérique est faible (voisine de la pression atmosphérique).

Le point de fusion et le point VICAT des élastomères thermoplastiques à motifs polyamide de l'invention sont fonction des motifs polyamide et des blocs polyéther.

La plage de température possible de vulcanisation est aussi fonction des motifs polyamide et des blocs polyéther.

L'avantage des élastomères à motifs polyamide de la présente invention est qu'on peut opérer la vulcanisation bien en-dessous de son point de fusion.

La plage de température de vulcanisation est celle où le matériau obtenu présente une rupture essentiellement cohésive. La limite basse est définie comme étant la température la plus basse qui conduit à une adhérence de type rupture cohésive. La limite haute n'est en général pas fixée par la propriété du matériau obtenu mais c'est la température maximum qui permet le démoulage aisé du matériau sans déformation plastique ni adhérence de l'élastomère à motifs polyamides sur les parois du moule ni de collage du matériau sur les parois du moule.

Par exemple, les élastomères thermoplastiques ayant des blocs polyamide 6 de masse molaire moyenne en nombre de 1300 et des blocs polyéther dérivés du PTMG et de masse molaire moyenne en nombre de 650, permettent une plage de vulcanisation de 140 à 180° C, ce qui comprend la température habituelle de vulcanisation du caoutchouc soit 155° C.

On ne sortirait pas du cadre de l'invention en mettant un peu d'adhésif sur la surface de l'élastomère à motifs polyamides.

Lorsque la vulcanisation est terminée, au bout d'un temps inférieur à 15 minutes, avantageusement compris entre 5 et 10 minutes, déterminé au préalable par le $t_{90}$ du rhéomètre oscillant, la pièce est retirée.

Dans le cas où l'élastomère thermoplastique à motifs polyamide est un film, on applique, lorsque l'on change l'épaisseur, une formule empirique bien connue dans la technique de vulcanisation des élastomères:

$$\text{Temps de vulcanisation (min)} = t_{90} + \left(\frac{E}{2} - 2\right)$$

E étant l'épaisseur en mm.

La résistance à la séparation est appréciée par différents tests normalisés qui seront choisis selon le type de matériau composite considéré.

Si le polyéther à blocs polyamides est sous la forme d'un film, la résistance à la séparation sera mesurée par le test de pelage. De préférence, la résistance au pelage sera avantageusement supérieure à .5.daN/cm.

Dans le cas, d'un point de vue industriel le plus intéressant, où l'élastomère thermoplastique à motifs polyamide est un bloc ou objet ayant une forme définie, par exemple, un élément de renfort noyé partiellement ou inséré dans l'élastomère vulcanisé, on mesurera la résistance à la traction. celle-ci variera selon la forme de l'article.

L'invention trouve une application particulièrement intéressante pour la réalisation d'articles de sport dont une partie au moins est constituée d'un matériau composite tel que défini ci-dessus.

L'invention est ainsi avantageusement adaptée à la réalisation de semelles de chaussures de sport dont une partie au moins est en élastomère vulcanisé comportant un ou plusieurs éléments de renfort en élastomère thermoplastique comme décrit ci-avant.

Selon une forme particulière, la présente invention concerne aussi un matériau comprenant successivement (a) un élastomère vulcanisé (b) un élastomère thermoplastique comprenant des motifs à base de polyamide-6 et des séquences polyéther et (c) un mélange comprenant du polyamide-6 ou du Polyamide-6,6 et éventuellement une ou plusieurs polyoléfines, la partie (a) adhérant essentiellement sans adhésif sur la partie (b).

(c) peut n'être que du PA-6 ou du PA-6,6

On entend par polyoléfines des polymères comprenant des motifs oléfines tels que par exemple des motifs éthylène, propylène, butène-1, etc

A titre d'exemple, on peut citer :

- le polyéthylène, le polypropylène, les copolymères de l'éthylène avec des alphaoléfines. Ces produits pouvant être greffés par des anhydrides d'acides carboxyliques insaturés tels que l'anhydride maléique ou des époxydes insaturés tels que le méthacrylate de glycidyle.
- les copolymères de l'éthylène avec au moins un produit choisi parmi (i) les acides carboxyliques insaturés, leurs sels, leurs esters, (ii) les esters vinyliques d'acides carboxyliques saturés, (iii) les acides dicarboxyliques insaturés, leurs sels, leurs esters, leurs hemiesters, leurs anhydrides (iv) les époxydes insaturés.

    Ces copolymères de l'éthylène pouvant être greffés par des anhydrides d'acides dicarboxyliques insaturés ou des époxydes insaturés.
- les copolymères blocs styrène / éthylène-butène / styrène (SEBS) éventuellement maléisés.

On peut utiliser des mélanges de deux ou plusieurs de ces polyoléfines.

On utilise avantageusement:

- le polyéthylène,
- les copolymères de l'éthylène et d'une alpha-oléfine,
- les copolymères de l'éthylène / d'un (méth)acrylate d'alkyle,
- les copolymères de l'éthylène / d'un (méth)acrylate d'alkyle / de l'anhydride maléique, l'anhydride maléique étant greffé ou copolymérisé,
- les copolymères de l'éthylène / d'un (méth)acrylate d'alkyle / du méthacrylate de glycidyle, le méthacrylate de glycidyle étant greffé ou copolymérisé,
- le polypropylène.

Il est recommandé, pour faciliter le mélange, et si les polyoléfines ont peu ou pas de fonctions pouvant faciliter la compatibilisation, d'ajouter un agent compatibilisant.

L'agent compatibilisant est un produit connu en soi pour compatibiliser les polyamides et les polyoléfines.

On peut citer par exemple :

- le polyéthylène, le polypropylène, les copolymères éthylène propylène, les copolymères éthylène-butène, tous ces produits étant greffés par de l'anhydride maléique ou du méthacrylate de glycidyle.
- ies copolymères éthylène / (méth)acrylate d'alkyle / anhydride maléique, l'anhydride maléique étant greffé ou copolymérisé,
- les copolymères éthylène / acétate de vinyle / anhydride maléique, l'anhydride maléique étant greffé ou copolymérisé
- les deux copolymères précédents dans lesquels l'anhydride maléique est remplacé par le méthacrylate de glycidyle,
- les copolymères éthylène / acide (méth)acrylique éventuellement leurs sels,
- le polyéthylène, le propylène ou les copolymères éthylène propylène, ces polymères étant greffés par un produit présentant un site réactif avec les aminés ; ces copolymères greffés étant ensuite condensés avec des polyamides ou des oligomères polyamides ayant une seule extrémité amine.

Ces produits sont décrits dans les brevets FR 2 291 225 et EP 342 066.

La quantité de polyamide formant la matrice peut être comprise entre 55 et 95 parties pour 5 à 45 parties de polyoléfines.

La quantité de compatibilisant est la quantité suffisante pour que la polyoléfine se disperse sous forme de nodules dans la matrice polyamide. Elle peut représenter jusqu'à 20 % du poids de la polyoléfine. On fabrique ces polymères par mélange de polyamide, de polyoléfine et éventuellement de compatibilisant selon les techniques usuelles de mélange à l'état fondu (bi vis, Buss, monovis).

Avantageusement, le mélange comprend du polyamide 6 (PA-6) ou 66 (PA-6,6) dans laquelle sont dispersés, soit des nodules d'un mélange de polyéthylène basse densité et de copolymère d'éthylène de (méth)acrylate d'alkyl et d'anhydride maléique ou de méthacrylate de glycidyle, soit des nodules de polypropylène.

De tels produits sont décrits dans les brevets US 5 070 145 et EP 564 338.

Dans le cas du polypropylène, on ajoute un comptabilisant qui est avantageusement un copolymère éthylène / propylène majoritaire en nombre de motifs propylène, greffé par l'anhydride maléique, puis condensé ensuite avec des oligomères mono aminés de caprolactame.

Ces mélanges de polyamide et de polyoléfine peuvent être plastifiés et éventuellement contenir des charges telles que du noir de carbone, etc.

De tels mélanges de polyamide et de polyoléfine sont décrits dans le brevet US 5 342 886.

Le matériau selon cette forme particulière de l'invention est le matériau précédent sauf qu'une couche supplémentaire (c) d'un mélange comprenant du PA-6 ou du PA-6,6 et éventuellement une ou plusieurs polyoléfines a été ajoutée du côté de l'élastomère thermoplastique comprenant des motifs à base de polyamide 6 et des séquences polyéther.

On peut fabriquer ce matériau comprenant (a), (b) et (c) exactement comme le matériau comprenant (a) et (b) en remplaçant (b) par (b) et (c) associés.

(b) et (c) associés peut être préparé par coextrusion, laminage, etc.

On ne sortirait pas du cadre de l'invention si un liant de coextrusion était disposé entre les couches (b) et (c). Les liants sont des produits connus en eux-mêmes.

A titre d'exemple de liant, on peut citer :

- le polyéthylène, le polypropylène, les copolymères de l'éthylène et d'au moins une alpha oléfine, des mélanges de ces polymères, tous ces polymères étant greffés par des anhydrides d'acides carboxyliques insaturés tels que par exemple, l'anhydride maléique. On peut aussi utiliser des mélanges de ces polymères greffés et de ces polymères non greffés.
- les copolymères de l'éthylène avec au moins un produit choisi parmi (i) les acides carboxyliques insaturés, leurs sels, leurs esters, (ii) les esters vinyliques d'acides carboxyliques saturés, (iii) les acides dicarboxyliques insaturés, leurs sels, leurs esters, leurs hemiesters, leurs anhydrides, (iv) les époxydes insaturés ; ces copolymères pouvant être greffés par des anhydrides d'acides dicarboxyliques insaturés tels que l'anhydride maléique ou des époxydes insaturés tels que le méthacrylate de glycidyle.

On peut aussi ajouter à l'une ou à chacune des couches un produit qui améliore leur adhésion sans devoir utiliser une couche de liant. Ce produit peut être le liant décrit ci-dessus.

Ces matériaux peuvent se présenter sous diverses formes. Ce sont par exemple des tubes ayant une couche intérieure en polyamide (c). On peut les fabriquer par coextrusion, par exemple on coextrude les couches (b) et (c), puis on fait un gainage en caoutchouc suivi d'une vulcanisation. Dans ces tubes, la couche (b) est en fait un liant.

Selon une autre forme, ce sont des feuilles ou des plaques coextrudées qui se présentent sous forme de courroies telles que les courroies de transmission de puissance en mécanique. On peut aussi avant le dépôt de la couche de caoutchouc procéder à un étirage du matériau formé par les couches (b) et (c) pour en modifier les propriétés mécaniques.

Selon une autre forme, ce sont des bandes transporteuses.

L'invention est ainsi avantageusement adaptée a la réalisation de semelles de chaussures de sport dont une partie au moins est en élastomère vulcanisé comportant un ou plusieurs éléments de renfort en élastomère thermoplastique comme décrit ci-avant.

Les exemples ci-dessous illustrent l'invention sans toutefois la limiter.

Selon un procédé général de mise en oeuvre commun à tous les exemples décrits, la composition élastomérique sans le système de réticulation est formulée sur un mélangeur interne Repiquet K1 de 3,5 litres, dont les rotors tournent à 60 tpm. L'opération se fait en régime semi-adiabatique, avec transformation de l'énergie mécanique en chaleur. On obtient un mélange intime en moins de 5 minutes et la température atteint 110° C.

L'élastomère ainsi formulé est ensuite repris sur un mélangeur à cylindres chauffés à 80° C et on lui rajoute le système de vulcanisation.

Le surmoulage sur la pièce en élastomère thermoplastique à séquences polyamides par la composition élastomérique s'effectue dans un moule à compression en acier, placé entre les deux plateaux chauffants d'une presse.

La force de pelage est mesurée au bout de 24 heures. Le pelage est amorcé en se ménageant une zone sans adhésion entre élastomère vulcanisé et le polyéther à blocs polyamides avec un ruban adhésif d'aluminium placé sur le polyéther à blocs polyamides avant moulage de l'élastomère.

### *Exemple 1*

On prépare la formulation suivante SBR / XNBR.

| | |
|---|---|
| SBR 1502 (caoutchouc styrène butadiène) | 70 |
| XNBR 775 (caoutchouc nitrile carboxylé) | 30 |
| Silice VN3 | 30 |
| DOP (Dioctylphtalate) | 5 |
| PEG 4000 (Polyéthylèneglycol) | 2 |
| Si 69 | 1 |
| Tio 2 | 10 |
| Wingstay L | 1 |
| Polyvest C 70 | 4 |
| Acide stéarique | 2 |
| ZNO | 5 |
| MBTS | 1.5 |
| TMTD | 0.5 |
| Soufre | 2 |
| Vulkalent E | 1 |
| | 165 |
| Ts2 à 165° C : | 4 mn 30 sec |

Ts2 désigne le temps de grillage de la formulation caoutchouc à la température de vulcanisation (selon rhéogramme MONSANTO).

Elle est ensuite coulée sur un moule formé d'un élastomère thermoplastique de compositions :

PEBAX 1 est un copolymère séquencé résultant de la condensation de blocs PA6 de $M_n$ 2 000 à extrémités acides avec des blocs PTMG de $M_n$ 1 000.

PEBAX 2 est comme PEBAX 1 sauf les blocs PA6 de $M_n$ 1 300 et les blocs PTMG de $M_n$ 650.

Tableau 1

| Point de fusion | Point VICAT | Réf. PEBAX | T° C mini * | T° C maxi * | T° C | Force de pelage da N/cm | Rupture cohésive + adhésive 0 |
|---|---|---|---|---|---|---|---|
| 213 | 181 | PEBAX 1 | 180 | | 160 | 1.45 | 0 |
| | | | | | | 8 | + |
| | | | | 195 | | 7.5 | + |
| 195 | 148 | PEBAX 2 | 140 | | 160 | 8 | + |
| | | | | | | 6.1 | + |
| | | | | 180 | | 10 | + |

* T° mini et T° maxi sont les températures limites de vulcanisation pour obtenir une rupture cohésive sans déformer le film de PEBAX et autorisant un démoulage à chaud du composite.

### *Exemple 2 (comparatif)*

On opère comme dans l'exemple 1 mais avec des élastomères thermoplastiques à motifs polyamide 12 et motifs PTMG.

PEBAX 3 désigne des copolymères comme le PEBAX 1 sauf les blocs polyamides qui sont des blocs PA12

de $M_n$ 2 000.

PEBAX 4 désigne des copolymères comme le PEBAX 1 sauf les blocs polyamides qui sont des blocs PA12 de $M_n$ 4 000.

PEBAX 5 désigne des copolymères comme le PEBAX 1 sauf les blocs polyamides qui sont des blocs PA12 de $M_n$ 5 000.

Les résultats sont reportés dans le tableau 2.

Tableau 2

| Point de fusion | Point VICAT | Réf. PEBAX | T° C mini | T° C maxi | T° C | Force de de pelage daN/cm | Rupture |
|---|---|---|---|---|---|---|---|
| | | | 153 | | | 10 | + |
| 158 | 144 | PEBAX 3 | | 160 | | 10 | + |
| | | | 160 | | | | + |
| 168 | 161 | PEBAX 4 | | | 163 | 10 | + |
| | | | | 166 | | | + |
| | | | 165 | | | | + |
| 172 | 165 | PEBAX 5 | | | | | |
| | | | | 170 | | 11.6 | + |

### *Exemple 3*

Formulation élastomérique à base de XNBR :

Préparation d'une composition en mélangeur interne comprenant en parties en poids :

| | |
|---|---|
| XNBR RCG 7343 (caoutchouc nitrile carboxylé de Good Year) | 110 |
| Silice KS 300 | 20 |
| DIUP (Diisoundecylényle phtalate) | 5 |
| PEG 4000 (Polyéthylène glycol) | 2 |
| TiO2 (dioxyde de titane) | 5 |
| Si69 (agent de couplage) | 1 |
| Wingstay 29 (antioxydant chaleur) | 1 |
| polyvest C70 (agent de couplage) | 4 |

Cette composition a été mélangée sur cylindre à un système de vulcanisation de composition

| | |
|---|---|
| Soufre | 1 8 |
| ZnO (oxyde de zinc) | 5 |
| Acide Stéarique | 1 |
| MBTS | 1.5 |
| TMTD | 0.5 |

Le ts2 de cette formulation mesuré à l'aide du rhéomètre Monsanto est de 4 mn 35s à 160° C.

Cette formulation dotée de son sytème de vulcanisation est ensuite coulée sur un surmoule formé d'un film de polyéther à blocs polyamides (PEBAX 2 de l'exemple 1) dont l'épaisseur est de 0,5 mm.

Les conditions de moulage sont les suivantes : 40 bars à une température donnée (T) (précisée selon le tableau ci-dessous) pour une durée de 10 mn.

| Essais | Température T° C | Force de pelage (daN/cm) | Type de rupture |
|---|---|---|---|
| 1 | 155 | 11.2 | cohésive |
| 2 | 170 | 10.7 | cohésive |
| 3 | 180 | 10.7 | cohésive |

Les températures de moulage indiquées permettent la vulcanisation du caoutchouc et autorisent un démoulage à chaud des composites sans déformation du film de PEBAX.

Cette exemple montre qu'il est possible d'atteindre des valeurs d'adhésion satisfaisantes, au moins équivalentes à celles données dans l'exemple comparatif 2 et ceci sur une plage de température de mise en oeuvre de 25° C.

## Revendications

1. Matériau comprenant un élastomère vulcanisé adhérent, essentiellement sans adhésif, sur un élastomère thermoplastique comprenant des motifs à base de polyamide 6 et des séquences polyéthers.

2. Matériau selon la revendication 1 **caractérisé en ce que** l'élastomère thermoplastique comprend des séquences polyamides 6 et des séquences dérivées du polytétraméthylène glycol.

3. Procédé de préparation du matériau selon la revendication 1 ou 2 dans lequel on vulcanise une composition comprenant un élastomère contenant des fonctions acide carboxylique ou anhydride de diacide carboxylique et un système de réticulation dans un moule dont une partie est occupée par ledit élastomère à motifs à base de polyamide 6 à une température telle que le matériau présente une rupture cohésive.

4. Matériau comprenant successivement (a) un élastomère vulcanisé, (b) un élastomère thermoplastique comprenant des motifs à base de polyamide-6 et des séquences polyéther et (c) un mélange comprenant du polyamide-6 ou du polyamide-6,6 et éventuellement une ou plusieurs polyoléfines, la partie (a) adhérant essentiellement sans adhésif sur la partie (b).

5. Tube en matériau selon la revendication 4 dans lequel (c) est la couche intérieure

6. Courroie de transmission en matériau selon la revendication 4

7. Bande transporteuse en matériau selon la revendication 4.

## Claims

1. Material comprising a vulcanized elastomer adhering, essentially without any adhesive, to a thermoplastic elastomer containing nylon-6-based units and polyether blocks.

2. Material according to Claim 1, **characterized in that** the thermoplastic elastomer contains nylon-6 blocks and blocks derived from polytetramethylene glycol.

3. Process for preparing the material according to Claim 1 or 2, in which a composition, comprising an elastomer containing carboxylic acid or dicarboxylic acid anhydride functional groups and a crosslinking system, is vulcanized in a mould, part of which is occupied by the said elastomer containing nylon-6-based units, at a temperature such that the material exhibits cohesive failure.

4. Material comprising in succession (a) a vulcanized elastomer, (b) a thermoplastic elastomer containing nylon-6-based units and polyether blocks and (c) a blend comprising nylon-6 or nylon-6,6 and optionally one or more polyolefins, part (a) adhering essentially without any adhesive to part (b).

5. Tube or pipe made of material according to Claim 4, in which (c) is the inner layer.

6. Transmission belt made of material according to Claim 4.

7. Conveyor belt made of material according to Claim 4.

## Patentansprüche

1. Material, das ein vulkanisiertes Elastomer umfaßt, das an einem thermoplastischen Elastomer, das Einheiten auf der Basis von Polyamid-6 und Polyethersequenzen aufweist, im wesentlichen ohne Klebstoff haftet.

2. Material nach Anspruch 1, **dadurch gekennzeichnet, daß** das thermoplastische Elastomer Sequenzen von Polyamid-6 und Sequenzen, die von Polytetramethylenglykol abgeleitet sind, aufweist.

3. Verfahren zur Herstellung eines Materials nach Anspruch 1 oder 2, wobei in einer Form, die zum Teil mit dem Elastomer mit Einheiten auf der Basis von Polyamid-6 gefüllt ist, eine Zusammensetzung, die ein Elastomer, das Carbonsäurefunktionen oder Dicarbonsäureanhydridfunktionen aufweist, und ein Vernetzungssystem enthält, bei einer solchen Temperatur vulkanisiert wird, daß das Material einen Kohäsionsbruch zeigt.

4. Material, das aufeinander folgend aufweist: (a) ein vulkanisiertes Elastomer, (b) ein thermoplastisches Polymer mit Einheiten auf der Basis von Polyamid-6 und Polyethersequenzen und (c) ein Gemisch, das Polyamid-6 oder Polyamid-6,6 und gegebenenfalls ein oder mehrere Polyolefine enthält, wobei (a) im wesentlichen ohne Klebstoff an (b) haftet.

5. Rohrleitung aus dem Material nach Anspruch 4, wobei (c) die innere Schicht ist.

6. Treibriemen aus dem Material nach Anspruch 4.

7. Förderband aus dem Material nach Anspruch 4.